# EUROPÄISCHE PATENTSCHRIFT

(11) **EP 0 529 567 B1**
(45) Veröffentlichungstag und Bekanntmachung des Hinweises auf die Patenterteilung: **09.10.1996**
(21) Anmeldenummer: 92114410.1
(22) Anmeldetag: 24.08.1992
(51) Int. Cl.: A01G 3/02

(54) **Gartenschere**
Garden shears
Cisailles de jardinage

(30) Priorität: 30.08.1991 DE 9110772 U
(43) Veröffentlichungstag der Anmeldung: 03.03.1993
(73) Patentinhaber: Wolf-Geräte GmbH, D-57518 Betzdorf (DE)
(72) Erfinder: Ort Hey, Gebhard, W-5241 Nauroth (DE)
(74) Vertreter: Koch, Günther, Dipl.-Ing.

(56) Entgegenhaltungen:
- EP-A- 0 135 737
- DE-U- 8 525 568

## Beschreibung

Die Erfindung bezieht sich auf eine Gartenschere, die im Garten für die verschiedensten Zwecke, beispielsweise zum Schneiden dünner Äste, Anwendung finden kann. Derartige Gartenscheren sollen bei Nichtgebrauch im geschlossenen Zustand verriegelt werden, um die Schneiden abzudecken und so die Verletzungsgefahr zu verringern. Eine geschlossene Schere weist auch einen gegenüber einer offenen Schere wesentlich verringerten Platzbedarf auf. Zum Zwecke der gegenseitigen Verriegelung der beiden Scherenschenkel sind außer den mit Verriegelungsstifen zusammenwirkenden Sperrhaken auch Schieberanordngungen üblich, die in Ausnehmungen der beiden Scherenschenkel oder Messerklingen eingeschoben werden können und diese in Sperrstellung gegen ein Ausschwenken um das Scherengelenk sichern.

Aus der EP-A-0 135 737 ist eine Gartenschere bekannt, die mit einem mit Gegenmesser versehenen Obergriff, einem mit einer Messerklinge versehenen Untergriff, mit einem Scherengelenk und mit einer Zuhaltung versehen ist, die die Griffe entgegen der Kraft einer Öffnungsfeder in Schließstellung hält und einen Schiebegriff aufweist, der von beiden Seiten der Schere her zugänglich ist. Der Schieber läuft etwa in der Längsmittelebene der Schere und ist von beiden Seiten her zugänglich, wobei der Schieber von der einen Seite her durch den Daumen betätigbar ist, wobei zweckmäßigerweise der Schieber von der anderen Seite her durch den Zeigefinger abgestützt wird. Die Spreizfeder der Griffe ist durch ein Loch des Schiebers geführt, und diese Spreizfeder wird in Verriegelungsstellung durch den Schieber leicht ausgeknickt, um die Schieberstellung zu fixieren. Bei der Betätigung des Schiebers muß nicht nur der Daumen, sondern auch der Zeigefinger von dem Griffschenkel entfernt werden, um den Schieber von unten her abzustützen. Bei ungeschickter Handhabung kann dabei durch die Kraft der Öffnungsfeder der eine Handgriff den Fingern entgleiten, und die Schere kann herunterfallen.

Der Erfindung liegt die Aufgabe zugrunde, den Bedienungskomfort einer solchen Gartenschere im Hinblick auf die Betätigung des Verriegelungsschiebers noch weiter zu verbessern.

Gelöst wird die gestellte Aufgabe durch die Gesamtheit der im Patentanspruch 1 angegebenen Merkmale. Dadurch, daß der Schiebegriff nicht in der Mittelebene, sondern auf der Außenseite des metallischen Obergriffs reitet, der teilweise von einer Kunststoffschale umschlossen ist, die auch den Schiebegriff teilweise abdeckt, ergibt sich eine einfache und sichere Führung für die Zuhaltung, verbunden mit einer sehr einfachen Montagemöglichkeit. Der Schieber kann mit dem Daumen der die Schere erfassenden Hand betätigt werden, ohne daß der Zeigefinger von dem Gegengriff abgehoben werden muß. Ein unbeabsichtigtes Aufspreizen der Schere bei ungeschickter Handhabung wird dadurch weitgehend ausgeschaltet. Diese Betätigung des Schiebers allein mit dem Daumen kann sowohl mit der rechten Hand als auch mit der linken Hand durchgeführt werden, wobei es sogar gleichgültig ist, ob die Schere bestimmungsgemäß mit den vier Fingern der Hand an dem Scherenschenkel angreift, der jenem Schenkel gegenüberliegt, in dem der Schiebegriff gelagert ist, oder an jenem Scherenschenkel, der den Schieber aufweist.

Nachstehend wird ein Ausführungsbeispiel der Erfindung anhand der Zeichnung beschrieben. In der Zeichnung zeigen:
Fig. 1 eine Vorderansicht der den Gegenstand der Erfindung bildenden Gartenschere;
Fig. 2 eine Rückansicht zu Fig. 1;
Fig. 3 eine Querschnittsansicht der Schere in größerem Maßstab, geschnitten in Höhe der Gelenkachse;
Fig. 4 eine Teilansicht des Untergriffs;
Fig. 5 einen Schnitt nach der Linie 5-5 gemäß Fig. 6;
Fig. 6 eine Ansicht des Verriegelungsschiebers;
Fig. 7 eine Schnittansicht des Obergriffes zur Veranschaulichung der Griffschalenbefestigung;
Fig. 8 eine Schnittansicht des Obergriffs zur Veranschaulichung der Befestigung der Handschlaufe.

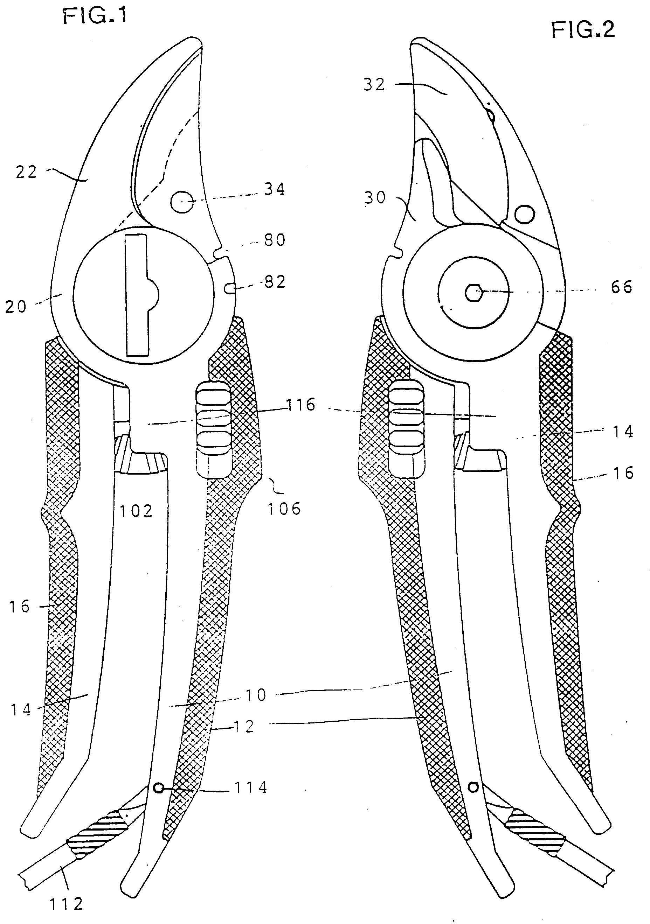

Die Schere weist einen Obergriff 10 mit Griffschale 12 und einen Untergriff 14 mit Griffschale 16 auf. Die Griffe 10 und 14 bestehen aus Aluminium-Druckguß und die Griffschalen aus Kunststoff. Die beiden Griffe sind über ein Scherengelenk mit Gelenkachse 18 verbunden. Beide Griffe sind im Bereich des Gelenkes ringscheibenförmig ausgebildet und über das Gelenk in den Bereich der Schneidmesser vorgezogen.Der ringscheibenförmige Gelenkabschnitt 20 des Obergriffs setzt sich in einem sichelförmigen Abschnitt 22 fort. Im Bereich seiner Abschnitte 20 und 22 trägt der Obergriff das Gegenmesser 24, das in seiner äußeren Umfangsform den Abschnitten 20 und 22 des Obergriffs 10 angepaßt ist. Dieses Gegenmesser 24 ist mit dem Obergriff durch Nieten 26 verbunden. Da dieses Gegenmesser einer geringeren Abnutzung unterworfen ist, kann es mittels dieser Nieten fest am Obergriff 10 angeordnet werden. Erforderlichenfalls ist jedoch unter Lösen der Nieten eine Auswechslung möglich. Die Nieten 26 sind mit dem Obergriff 10 im Druckgußverfahren hergestellt und daher von vorn her (Fig. 1) nicht sichtbar.

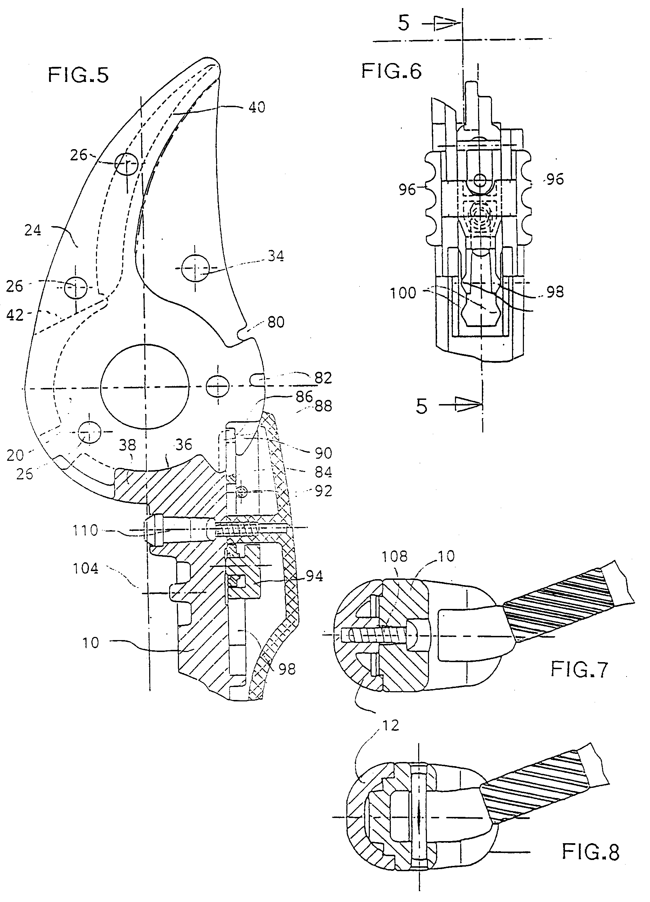

Der Untergriff 14 weist ebenfalls einen ringscheibenförmigen Gelenkabschnitt 28 und einen fingerartigen Fortsatz 30 auf. Von diesen Abschnitten 28 und 30 wird die Messerklinge 32 abgestützt, die mit dem Gegenmesser 24 zusammenarbeitet und im Bereich der Schneide freiliegt, d.h. der fingerartige Fortsatz 30 erstreckt sich, wie insbesondere aus Fig. 2 ersichtlich, nur über den hinteren unteren Abschnitt der Messerklinge 32, so daß der Schneidbereich der Klinge freiliegt und ein unbehindertes Schneiden möglich wird. Der fingerartige Fortsatz 30 ist nach der Klinge hin abgeflacht, wodurch sich eine günstige Führung für das Schneidgut ergibt. Auf der Innenseite trägt der Fortsatz 30 einen angeformten Stift 34, der in ein Loch der Messerklinge 32 einsteht und hiermit eine Formschlußverbindung in Umfangsrichtung herstellt. Eine weitere Formschlußverbindung, die aus der Zeichnung nicht ersichtlich ist, befindet sich im scheibenförmigen Abschnitt auf der gegenüberliegenden Seite. Hier ist die Messerklinge in ihrem ringscheibenförmigen Bereich mit einem Sektorausschnitt versehen, in den ein entsprechender Vorsprung des scheibenförmigen Gelenkabschnitts 24 vorsteht. Diese Formschlußverbindung ist in der gleichen Weise ausgebildet, wie aus Fig. 5 für das Gegenmesser 24 ersichtlich. Dieses weist einen sektorförmigen Ausschnitt 36 auf, in den ein entsprechend geformter Vorsprung der Gelenkscheibe 20 einsteht.

Die Messerklinge 32 liegt dem Gegenmesser 24 im ringförmigen Gelenkabschnitt und in dem in gleicher Ebene liegenden Randabschnitt flächenhaft an, der durch den längs der Kante 42 zurückversetzten Abschnitt 44 gebildet wird.

Das Gelenk weist eine Stahlbuchse 46 auf, die in einer Bohrung des ringscheibenförmigen Gelenkabschnitts 20 des Obergriffs 10 im Preßsitz festgelegt ist. Die Buchse stützt sich mit einem nach außen weisenden Ringflansch 48 an einer entsprechenden Ringstufe des Gelenkabschnitts 20 ab und steht durch die Bohrung des Gegenmessers 24 und die Gelenkbohrung der Messerklinge 32 ein.

Durch die Stahlbuchse 46 ist vom Obergriff her eine Schraubbuchse 50 eingeführt, die einen flachen, nach außen konvexen Kopf 52 aufweist, der in eine ringförmige Vertiefung 54 des ringscheibenförmigen Gelenkabschnitts 20 des Obergriffs eingreift, so daß auf der Oberseite (Fig. 1) der Gelenkabschnitt flach ausgebildet ist und ein Hängenbleiben am Geäst u.s.w. vermieden wird.

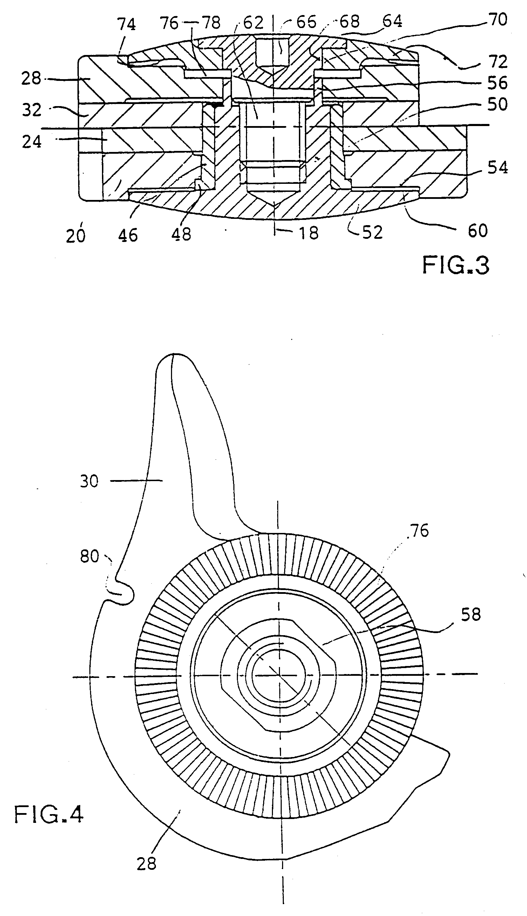

Die Schraubbuchse 50 steht, wie aus Fig. 3 ersichtlich, mit ihrem abgeflachten Endabschnitt 56 in ein entsprechend geformtes Loch 58 des ringscheibenförmigen Gelenkabschnitts 28 des Untergriffes 14 formschlüssig ein, so daß die Schraubbuchse 50 mit ihrem Kopf 52 relativ zu dem ringscheibenförmigen Gelenkabschnitt 20 und dem Gegenmesser 24 verdrehbar ist, jedoch drehfest mit dem Untergriff verbunden ist. Um eine freie Drehung zu gewährleisten, ist zwsichen der Vertiefung 54 und der Innenseite des Kopfes 52 ein Ringspalt 60 vorgesehen. In das Innengewinde der Schraubbuchse 50 ist eine Gelenkschraube 62 eingeschraubt. Die Gelenkschraube 62 weist einen flachen, nach außen konvexen Kopf 64 auf, der mit einem Innensechskant 66 versehen ist. Unter dem flanschartig nach außen gezogenen Kopf besitzt die Gelenkschraube einen Vierkant 68, mit dem sie formschlüssig in ein entsprechendes Vierkantloch 70 einer Rastscheibe 72 einsteht, die in einer Ringausnehmung 74 des Gelenkabschnitts 28 zu liegen kommt und eine nach außen schwach konvexe Form besitzt, die in die Oberfläche des Abschnitts 28 und die Oberfläche des Kopfes 64 übergeht. Innerhalb der Vertiefung weist der ringscheibenförmige Gelenkabschnitt 28 eine Rastung 76 in Form radial verlaufender Zähne auf, die mit einer entsprechenden Rastung 78 der Rastscheibe 72 zusammenwirkt, die ebenfalls aus radial verlaufenden Zähnen besteht.

Durch dieses flache, im Design integrierte Scherengelenk wird ein Hängenbleiben am Geäst u.s.w. verhindert. Die radiale Belastung wird durch die Stahlbuchse 46 aufgenommen, und die axiale Belastung durch die Schraubbuchse 50, die Gelenkschraube 62 und die Rastscheibe 72. Dadurch werden die Scherkräfte und die Axialkräfte in verschiedenen Bauteilen aufgenommen. Durch die Gelenkschraube 62 ist eine einfache Nachstellbarkeit der Scherenblätter gewährleistet, wobei die Rastung 76 und 78 eine Beibehaltung der eingestellten Lage gewährleistet. Nach Lösen der Gelenkschraube und Abnahme des Untergriffs kann die Messerklinge 32 einfach abgehoben und ausgetauscht oder nachgeschliffen werden.

Zum Schneiden von Draht und dergleichen weist die Messerklinge 32 und hiermit fluchtend der Fortsatz 30 des Gelenkteils 28 einen Einschnitt 80 auf, der mit einem entsprechenden Einschnitt des Obermessers zur Deckung gebracht werden kann. Der so gebildete Drahtschneider 80, 82 liegt demgemäß außerhalb des Schneidbereichs der Messerklinge 32, so daß ein versehentliches Beschädigen der Messer durch Schneiden von Draht mittels der Klinge vermieden wird.

Die Zuhaltung zur Verriegelung der Schere in Schließstellung wird durch einen im Obergriff 10 längs verschiebbar gelagerten Schieber 84 bewirkt. Dieser Schieber 84 greift in der aus Fig. 5 ersichtlichen Verriegelungsstellung in einen Schlitz 86 der Messerklinge 32 ein und verriegelt damit den Untergriff gegenüber dem Obergriff. Gleichzeitig greift der aus Stahl bestehende Schieber an der Hinterkante 88 einer Ausnehmung 90 des Gegenmessers 24 an, so daß die beiden Messer gegeneinander verriegelt sind. Der Schieber 84 läuft auf einer ebenen Oberfläche des Obergriffs 10 und wird durch einen Stift 92 gesichert, der auf der gegenüberliegenden Seite des Schiebers 84 zu liegen kommt. Dadurch befindet sich immer eine Seite des Schiebers in Eingriff während die andere Seite zur Verriegelung in den Schlitz des Obermessers eingeschoben wird. In den Schieber 84 greift ein Schiebegriff 94 aus Kunststoff ein, der mit Griffriffelungen 96 (Fig. 6) auf beiden Seiten des Obergriffes vorsteht, so daß dieser Schiebegriff sowohl von Linkshändern als auch von Rechtshändern bequem bedient werden kann. Am hinteren Ende des Schiebers, der nach außen hin von der Griffschale 12 abgedeckt ist, befinden sich Zwei Federrasten 98, die in Einbuchtungen 100 des Obergriffs eingreifen und ein unbeabsichtigtes Schließen oder Öffnen der Schere verhindern. Der auf diese Weise gelagerte Schieber kommt beim Schneiden nicht mit der Hand in Berührung, so daß Verletzungen ausgeschlossen sind. Eine Öffnungsfeder 102 bewirkt in herkömmlicher Weise eine Spreizung der Griffe 10 und 14, sie ist mit ihren Enden auf Ansätze 104 der Griffe 10 bzw. 14 aufgesteckt.

Zur hautfreundlichen Bedienbarkeit, zur Abdeckung des Zuhaltungsschiebers und zur Gewichtseinsparung sind auf den Druckgußgriffen die Kunststoffschalen 12 und 16 aufgebracht. An der Obergriffschale ist eine Erhöhung 106 im vorderen Bereich vorgesehen, welche ein nach vorne rutschen der Hand in den Bereich des Zuhaltungsschiebers verhindert. Die Obergriffschale 12 und die Untergriffschale 14 sind rundum gegen Verschieben durch eine ausformbare Nut-Falz-Verbindung gesichert. Gegen Abziehen entgegen der Kraftrichtung beim Schneiden sind diese Schalen mit jeweils zwei Schrauben 108 gesichert. Die Form der Griffe ist so gewählt, daß die Öffnungsfeder 102 und ein Anschlagpuffer 110 im geschlossenen Zustand beidseitig durch Rippen 116 abgedeckt werden. Diese Rippen 116 dienen auch zur Stabilisierung der Druckgußteile. Zum jeweiligen Ober- bzw. Untergriff ist ein erheblicher Abstand vorgesehen, der verhindert, daß die Handflächen eingeklemmt werden. Aus gleichen Gründen sind an dieser Stelle auch große Radien vorgesehen. Eine Handschlaufe 112 ist am hinteren Ende des Obergriffs 10 so eingesetzt, daß sie ohne störende überstehende Teile auskommt und beim Arbeiten nicht hindert. Die Schlaufe 112 ist durch einen Stift 114 gesichert, der in eine Bohrung des Obergriffs eingesteckt ist.

## Patentansprüche

1. Gartenschere mit den folgenden Merkmalen:
- ein Untergriff (14) ist mit einem ringscheibenförmigen Gelenkabschnitt (28) und einem fingerartigen Fortsatz (30) versehen, die eine ihrer Umfangsform angepaßte Messerklinge (32) in Schneidrichtung formschlüssig abstützen;
- ein Obergriff (10) ist mit einem ringscheibenförmigen Gelenkabschnitt (20) und einem sichelförmigen Fortsatz (22) versehen, die ein ihrer Umfangsform angepaßtes Gegenmesser (24) in Schneidrichtung formschlüssig abstützen;
- eine Zuhaltung in Form eines Verriegelungsschiebers (84) hält die Griffe (10, 14) entgegen der Kraft einer Öffnungsfeder (102) in Schließstellung;
- Untergriff und Obergriff (10) tragen Griffschalen (16; 12) aus Kunststoff;
- der Verriegelungsschieber (84) weist einen Schiebegriff (94) auf und ist auf dem Obergriff (10) von beiden Seiten zugänglich verschiebbar gelagert, durch einen Stift (92) im Obergriff (10) gesichert und von außen durch die Griffschale (12) derart abgedeckt, daß beidseitig Griffriffelungen (96) vorstehen;
- der aus Stahl bestehende Schieber greift in Verriegelungsstellung in einen Schlitz (86) der Messerklinge (32) ein und greift gleichzeitig an der Hinterkante (88) einer Ausnehmung (90) des Gegenmessers (24) derart an, daß die beiden Messer (32; 24) gegeneinander verriegelt sind.

2. Gartenschere nach Anspruch 1,
dadurch gekennzeichnet, daß der Schieber (84) einen die Griffriffelungen (96) aufweisenden Kunststoffschieber (94) trägt, der am hinteren Ende Federrasten (98) aufweist, die mit Einbuchtungen (100) des Oberbegriffes (10) zusammenwirken.

3. Gartenschere nach Anspruch 1,
dadurch gekennzeichnet, daß die Obergriffschale (12) unterhalb des Schiebegriffs (94) mit einer Erhöhung (106) als Handabstützung versehen ist.

4. Gartenschere nach Anspruch 1,
dadurch gekennzeichnet, daß der auf beiden Seiten der Obergriffschale (12) vorstehende Schiebegriff (94) mit Griffriffelungen (96) versehen ist.

## Claims

1. Pruning shears having the following features:
- a lower grip (14) is provided with an annular disc-shaped joint section (28) and a finger-like extension (30) which support, in a form-locking manner in the direction of cutting, a cutter blade (32) which is adapted to their peripheral shape;
- an upper grip (10) is provided with an annular disc-shaped joint section (20) and a sickle-shaped projection (22) which support, in a form-locking manner in the direction of cutting, a countercutter (24) which is adapted to their peripheral shape;
- a follower in the form of a latching slide (84) holds the grips (10, 14) in the closing position against the force of an opening spring (102);
- the lower grip and the upper grip (10) carry grip scales (16; 12) made of plastics material;
- the latching slide (84) has a sliding grip (94) and is displaceably mounted on the upper grip (10) so as to be accessible from both sides, is secured by a pin (92) in the upper grip (10) and is masked from the outside by the grip scale (12) in such a way that gripping corrugations (96) protrude on both sides;
- the slide, which consists of steel, engages, in the latching position, in a slot (86) in the cutter blade (32) and, at the same time, acts upon the rear edge (88) of a recess (90) in the countercutter (24) in such a way that the two cutters (32; 24) are latched against one another.

2. Pruning shears according to Claim 1 characterised in that the slide (84) carries a plastic sliding grip (94) which has spring notches (98) at the back, which work in conjunction with the indentations (100) on the top grip (10).

3. Pruning shears according to Claim 1, characterised in that the scale (12) of the upper grip is provided, below the sliding grip (94), with an elevation (106) as a support for the hand.

4. Pruning shears according to Claim 1, characterised in that the sliding grip (94) protruding on both sides of the scale (12) of the upper grip is provided with gripping corrugations (96).

## Revendications

1. Sécateur présentant les caractéristiques suivantes :
- une branche inférieure (14) est munie d'une partie d'articulation en forme de disque annulaire (28) et d'un prolongement semblable à un doigt (30), qui supportent avec un engagement positif dans la direction de coupe une lame tranchante (32) dont la forme est adaptée à celle de leur pourtour ;
- une branche supérieure (10) est munie d'une partie d'articulation en forme de disque annulaire (20) et d'un prolongement en forme de faucille (22), qui supportent avec un engagement positif dans la direction de coupe une lame d'appui (24) dont la forme est adaptée à celle de leur pourtour ;
- un fermoir ayant la forme d'un verrou (84) maintient les branches (10, 14) en position fermée contre la force d'un ressort d'ouverture (102) ;
- la branche inférieure et la branche supérieure (10) portent des poignées (16 ; 22) en matière plastique ;
- le verrou (84) présente un coulisseau (94) et est monté sur la branche supérieure (10) de manière coulissante en étant accessible par les deux côtés, est assuré dans la branche supérieure (10) par une cheville (92) et est recouvert à l'extérieur par la poignée (12) de telle manière que des cannelures de préhension (96) fasse saillie de chaque côté;
- le verrou en acier est logé, en position de verrouillage, dans une fente (86) de la lame tranchante (32) et est simultanément en prise avec l'arête arrière (88) d'un évidement (90) de la lame d'appui (24) de telle manière que les deux lames (32 ; 24) soient verrouillées l'une par rapport à l'autre.

2. Sécateur selon la revendication 1, caractérisé en ce que le verrou (84) porte un coulisseau en matière plastique (94) présentant des cannelures de préhension (96) et comportant à l'extrémité arrière des dents faisant ressort (98), lesquelles coopèrent avec des crans (100) de la branche supérieure (10).

3. Sécateur selon la revendication 1, caractérisé en ce que la poignée (12) de la branche supérieure est munie sous le coulisseau (94) d'une élévation (106) servant d'appui pour la main.

4. Sécateur selon la revendication 1, caractérisé en ce que le coulisseau (94) faisant saillie des deux côtés de la poignée (12) de la branche supérieure est muni de cannelures de préhension (96).
